# EUROPEAN PATENT SPECIFICATION

(11) **EP 3 261 448 B1**
(45) Date of publication and mention of the grant of the patent: **04.09.2019**
(21) Application number: 16721017.8
(22) Date of filing: 18.02.2016
(51) Int. Cl.: A21D 13/00, A21D 15/02

(54) **PROCESS FOR PRODUCING FROZEN BREAD WITH QUICK PREPARATION FOR CONSUMPTION**
VERFAHREN ZUR HERSTELLUNG VON GEFRORENEN BROTS MIT SCHNELLER VORBEREITUNG ZUM VERZEHR
PROCEDE DE PRODUCTION DE PAIN CONGELE A PREPARATION RAPIDE POUR CONSOMMATION

(30) Priority: 23.02.2015 IT TO20150121
(43) Date of publication of application: 03.01.2018
(73) Proprietor: Dolciaria Orsobianco S.r.l., 12011 Borgo San Dalmazzo (CN) (IT)
(72) Inventor: BONELLI, Ivano, 12011 Borgo San Dalmazzo (CN) (IT); BONELLI, Luca, 12011 BORGO SAN DALMAZZO (CN) (IT)
(74) Representative: Garavelli, Paolo
(86) International application number: PCT/IT2016/000040
(87) International publication number: WO 2016/135762

(56) References cited:
- WO-A1-2014/061042
- DE-A1-102004 051 640
- US-A- 4 366 178
- US-A- 4 986 992
- US-A1- 2007 202 230
- US-A1- 2008 020 091
- FRITCH C F: "FREEZING BAKERY PRODUCTS WITH LIQUID NITROGEN", BAKER'S DIGEST, SIEBEL PUBLISHING CO. PONTIAC, ILLINOIS, US, vol. 45, no. 5, 1 October 1971 (1971-10-01), page 61/62,75, XP001024794, ISSN: 0191-6114

## Description

The present invention refers to a process for producing bread, frozen/lowered in temperature, with quick recovery, before its consumption.

In order to allow a wider and more prolonged consumption, the most common products from oven (bread, pasta, confectionery), as well as foodstuff products more in general, have been subjected for years to freezing, to be then heated and consumed afterwards in time with respect to their production.

Freezing, down to a temperature of approximately -18°C, of products from oven is a process which, upon their heating (completion of cooking) before their final consumption, implies very long times (on the order of 30 minutes) to obtain an edible product. Such long times are incompatible with uses of such products which provide for their immediate consumption by their users: think about a cake which must be consumed at breakfast, for which a user must wait for this period before its consumption, if the stocks of such cake run out in a short time.

In order to solve this type of problem, processes have been used (for example like the one disclosed in US 4,986,992) in which a partially cooked (at about 80%) confectionery product is subjected to immediate freezing through the use of liquid nitrogen taking it down to an initial temperature of about -4 °C and then at the freezing temperature of -18 °C, in a time equal to about 10 - 11 minutes. To allow such working, these confectionery products however provide for the use of additives, which is not optimum for the quality of the final product.

The Applicant of the present invention has already solved these problems by providing, in International Application WO-A-2014/061042, a process for producing confectionery products from oven without additives, frozen/lowered in temperature, with quick recovery before their consumption, which is simple to make, and which allows obtaining confectionery products which keep their internal structure free from additives and which can be recovered in very short times, obtaining again a final product with the same organoleptic features of the one which originally went out of its production oven.

A process for freezing baked bread goods, where a cryogenic cooler is used for the freezing step, is described in US 4 366 178.The freezing of bakery products with liquid nitrogen is described in e.g., Fritch CF, Jr, The Bakers Digest of October 1971, p.61-62 and 75.

Object of the present invention is integrating the above mentioned process, applying it only to the production of bread, which process, though with the various facets implicit in the production of several types of bread, allows obtaining in a standardized way a bread as if newly cooked, after a quick recovery after its freezing and its transport to its place of use.

The above and other objects and advantages of the invention, as will result from the following description, are obtained with a process as claimed in claim 1. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example.

According to the invention, a process is provided for producing bread, frozen/lowered in temperature, with quick recovery before its consumption, comprising the steps of:
- cooking the bread, after levitation, to 90% with respect to its complete cooking;
- immediately lowering the temperature of the cooked bread through the use of liquid nitrogen, down to a lowering temperature at most equal to -60 °C;
- packaging and freezing the bread, through a first sub-step of obtaining a temperature from -10 °C to -11 °C in the bread core, and a second sub-step of keeping the bread at a freezing temperature of -18 °C for at least 12 hours; and
- storing and transporting the packaged bread, always at a temperature of at least -18 °C.

The step of cooking can occur in a oven at a temperature from 160 °C to 260 °C for a cooking time from 20 to 50 minutes according to the type of bread.

Moreover, the step of lowering the temperature down to -60 °C from the output of the step of cooking is performed for a time equal to about 9 minutes.

The inventive process further comprises the step of taking back to ambient temperature the bread frozen/lowered in temperature through a stay at ambient temperature for a period of about 1 hour.

Finally, the inventive process comprises the final step of restoring the bread to take it back to the temperature at which it can be consumed, in a time preferably equal to about 3 minutes.

With the above described process, it is possible to make bread subjected to less stresses during its preparation and cooking, taking it back, in about 3 minutes of restoring after its freezing/ temperature lowering, to its edible status like the newly cooked one, with a strong saving of times and costs for its end user.

The obtained bread is free from preservatives and is composed of selected raw materials, which guarantee its final freshness before its consumption.

The products made with the inventive process can be stored in a range of temperatures from -5 °C to -20 °C and are restored at about 200 °C for a period from 3 to 7 minutes.

### EXAMPLES

The present invention will be further described by using some application examples, provided as a non-limiting example, in order to allow a skilled person in the art to understand the evolution of the inventive process and of the product derived therefrom.

Two tests have been performed, a cooking test and a temperature lowering test for cooked bread of the baguette type. The test results are included in the following Tables.

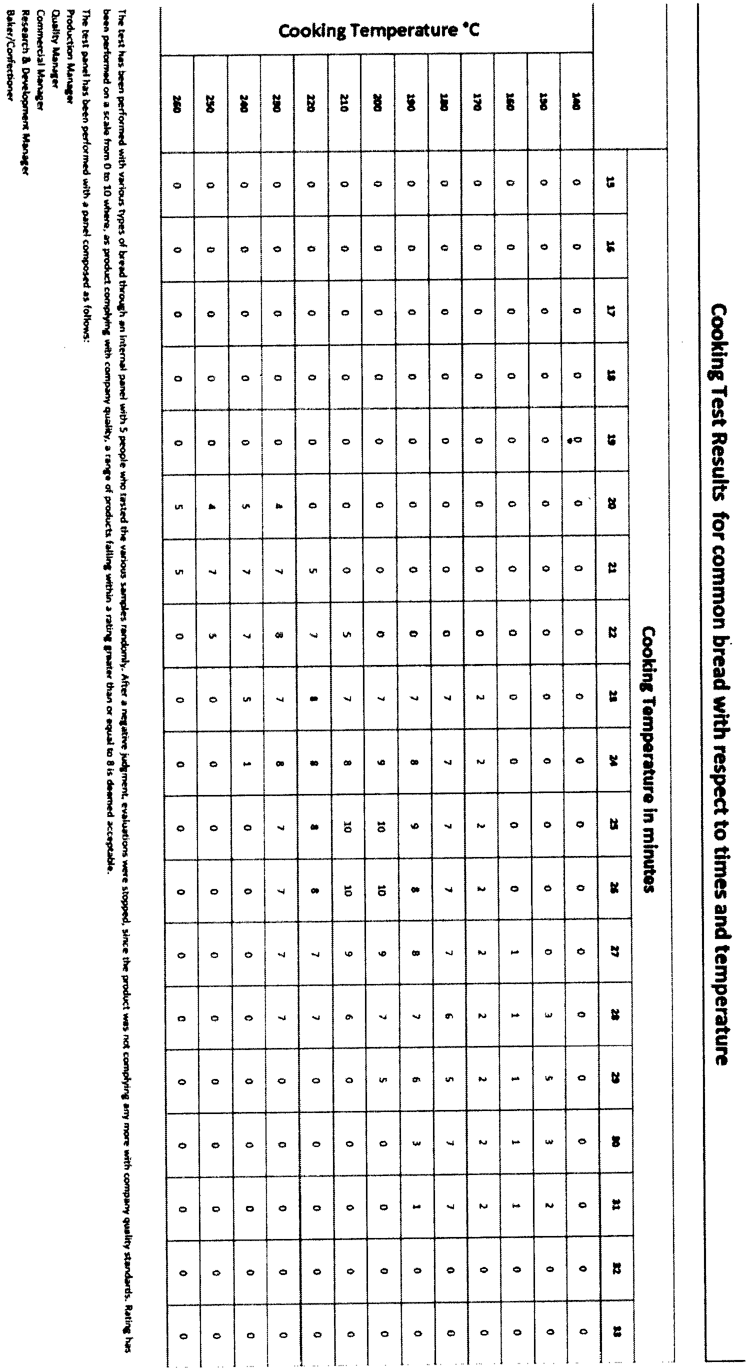

As can be seen from this first Table, related to the results of the temperature-lowering tests of cooked baguette bread with respect to times and temperatures, the satisfactory results are those pointed out in the light-coloured boxes.

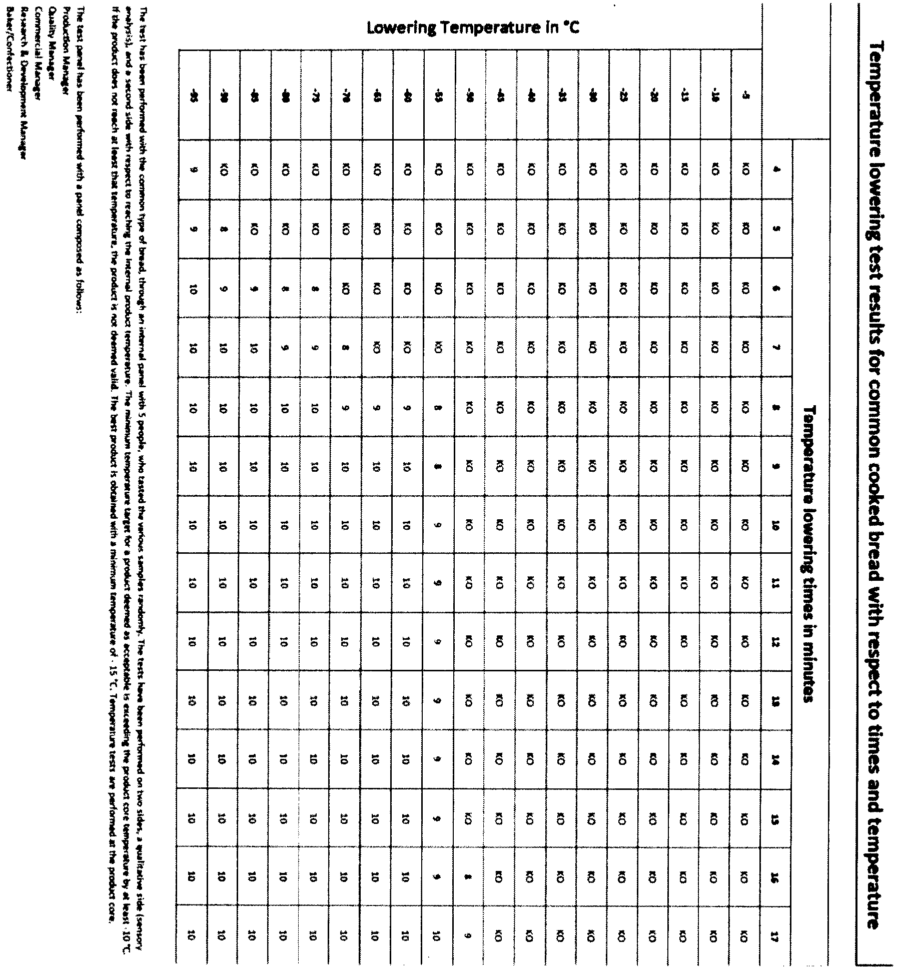

As can be seen from this second Table, related to the results of the cooking tests of baguette bread with respect to times and temperatures, the satisfactory results are those pointed out in the light-coloured boxes.

In order to complete the test, Test Cards are included below, which contain, in addition to test times and temperatures, the results of an evaluation test performed on a panel of 5 users, which have tasted the cooked baguette bread restored at the end of the process, and have assigned a rating equal to the maximum of scores for 100% of the panel users.

| **Test Panel Card** | | | | | | |
|---|---|---|---|---|---|---|
| | | | | | | |

| **Bread Type** | **Baguette** | | | | | |
|---|---|---|---|---|---|---|
| | | | | | | |

| **Parameters** | **Measur. Unit** | **Value** | | | | |
|---|---|---|---|---|---|---|
| Cooking time | Minutes | 25 | | | | |
| Cooking temperature | °C | 200 | | | | |
| Freezing time | Minutes | 6 | | | | |
| Freezing temperature | °C | -60 | | | | |
| Time in a cell at -18 °C | °C | 12 | | | | |
| Restoring time | Minutes | 3 | | | | |
| | | | | | | |

| **SENSORY EVALUATION** | | | | | | |
|---|---|---|---|---|---|---|
| **Evaluating person** | **Cooking evaluation** | **Fragrance evaluation** | **Colour evaluation** | **Nose evaluation** | **Taste evaluation** | **Average** |
| User 1 | 10 | 7 | 9 | 7 | 8 | 8.2 |
| User 2 | 10 | 5 | 8 | 8 | 8 | 7.8 |
| User 3 | 10 | 7 | 8 | 9 | 8 | 8.4 |
| User 4 | 10 | 5 | 7 | 7 | 8 | 7.4 |
| User 5 | 10 | 7 | 8 | 9 | 8 | 8.4 |
| **Average** | 10 | 6.2 | 8 | 8 | 8 | 8.04 |
| | | | | | | |

| | **Min °C** | **Max °C** | **Judgment** | | | |
|---|---|---|---|---|---|---|
| **Temperature at product core** | -4.8 | -3 | KO | | | |
| | | | | | | |

| | **Sensory tests** | **Product core temperature** | **Final Judgment** | | | |
|---|---|---|---|---|---|---|
| **Final judgment** | 8.04 | KO | KO | | | |

| Test **Panel Card** | | | | | | |
|---|---|---|---|---|---|---|
| | | | | | | |

| **Bread Type** | **Baguette** | | | | | |
|---|---|---|---|---|---|---|
| | | | | | | |

| **Parameters** | **Measur. Unit** | **Value** | | | | |
|---|---|---|---|---|---|---|
| Cooking time | Minutes | 25 | | | | |
| Cooking temperature | °C | 200 | | | | |
| Freezing time | Minutes | 6 | | | | |
| Freezing temperature | °C | -60 | | | | |
| Time in a cell at -18 °C | °C | 12 | | | | |
| Restoring time | Minutes | 3 | | | | |
| | | | | | | |

| **SENSORY EVALUATION** | | | | | | |
|---|---|---|---|---|---|---|
| **Evaluating person** | **Cooking evaluation** | **Fragrance evaluation** | **Colour evaluation** | **Nose evaluation** | **Tate evaluation** | **Average** |
| User 1 | 10 | 7 | 9 | 9 | 8 | 8.6 |
| User 2 | 10 | 9 | 10 | 8 | 8 | 9 |
| User 3 | 10 | 7 | 8 | 9 | 8 | 8.4 |
| User 4 | 10 | 9 | 10 | 9 | 7 | 9 |
| User 5 | 10 | 7 | 8 | 9 | 8 | 8.4 |
| **Average** | 10 | 7.8 | 9 | 8.8 | 7.8 | 8.68 |
| | | | | | | |

| | **Min °C** | **Max °C** | **Judgment** | | | |
|---|---|---|---|---|---|---|
| **Temperature at product core** | -7.1 | -6.8 | KO | | | |
| | | | | | | |

| | **Sensory** tests | **Product core temperature** | **Final judgment** | | | |
|---|---|---|---|---|---|---|
| **Final Judgment** | 8.68 | KO | KO | | | |

| **Test Panel Card** | | | | | | |
|---|---|---|---|---|---|---|
| | | | | | | |

| **Bread Type** | **Baguette** | | | | | |
|---|---|---|---|---|---|---|
| | | | | | | |

| **Parameters** | **Measur. Unit** | **Value** | | | | |
|---|---|---|---|---|---|---|
| Cooking time | Minutes | 25 | | | | |
| Cooking temperature | °C | 200 | | | | |
| Freezing time | Minutes | 6 | | | | |
| Freezing temperature | °C | -60 | | | | |
| Time in a cell at -18 °C | °C | 12 | | | | |
| Restoring time | Minutes | 3 | | | | |
| | | | | | | |

| **SENSORY EVALUATION** | | | | | | |
|---|---|---|---|---|---|---|
| **Evaluating person** | **Cooking evaluation** | **Fragrance evaluation** | **Colour evaluation** | **Nose evaluation** | **Taste evaluation** | **Average** |
| User 1 | 10 | 7 | 9 | 9 | 8 | 8.6 |
| User 2 | 10 | 9 | 10 | 8 | 8 | 9 |
| User 3 | 10 | 7 | 10 | 9 | 8 | 8.8 |
| User 4 | 10 | 10 | 10 | 9 | 8 | 9.4 |
| User 5 | 10 | 7 | 10 | 9 | 8 | 8.8 |
| **Average** | 10 | 8 | 9.8 | 8.8 | 8 | 8.8 |
| | | | | | | |

| | **Min °C** | **Max °C** | **judgment** | | | |
|---|---|---|---|---|---|---|
| **Temperature at product core** | -10.2 | -12 | OK | | | |
| | | | | | | |

| | **Sensory tests** | **Product core temperature** | **Final judgment** | | | |
|---|---|---|---|---|---|---|
| **Final judgment** | 8.92 | OK | OK | | | |

| **Test Panel Card** | | | | | | |
|---|---|---|---|---|---|---|
| | | | | | | |

| **Bread Type** | **Baguette** | | | | | |
|---|---|---|---|---|---|---|
| | | | | | | |

| **Parameters** | **Measur. Unit** | **Value** | | | | |
|---|---|---|---|---|---|---|
| Cooking time | Minutes | 25 | | | | |
| Cooking temperature | °C | 200 | | | | |
| Freezing time | Minutes | 6 | | | | |
| Freezing temperature | °C | -60 | | | | |
| Time in a cell at-18 °C | °C | 12 | | | | |
| Restoring time | Minutes | 3 | | | | |
| | | | | | | |

| **SENSORYEVALUATION** | | | | | | |
|---|---|---|---|---|---|---|
| **Evaluating** person | **Cooking evaluation** | **Fragrance evaluation** | **Colour evaluation** | **Nose evaluation** | **Taste evaluation** | **Average** |
| User 1 | 10 | 10 | 10 | 10 | 10 | 10 |
| User 2 | 10 | 10 | 10 | 10 | 10 | 10 |
| User 3 | 10 | 10 | 10 | 10 | 10 | 10 |
| User 4 | 10 | 10 | 10 | 10 | 10 | 10 |
| User 5 | 10 | 10 | 10 | 10 | 10 | 10 |
| **Average** | 10 | 10 | 10 | 10 | 10 | 10 |
| | | | | | | |

| | **Min °C** | **Max °C** | **Judgment** | | | |
|---|---|---|---|---|---|---|
| **Temperature at product core** | -15.7 | -18.1 | OK | | | |
| | | | | | | |

| | **Sensory tests** | **Product core temperature** | **Final judgment** | | | |
|---|---|---|---|---|---|---|
| **Final judgment** | 10 | OK | OK | | | |

| **Test Panel Card** | | | | | | |
|---|---|---|---|---|---|---|
| | | | | | | |

| **Bread Type** | **Baguette** | | | | | |
|---|---|---|---|---|---|---|
| | | | | | | |

| **Parameters** | **Measur. Unit** | **Value** | | | | |
|---|---|---|---|---|---|---|
| Cooking time | Minutes | 25 | | | | |
| Cooking temperature | °C | 200 | | | | |
| Freezing time | Minutes | 6 | | | | |
| Freezing temperature | °C | -60 | | | | |
| Time in a cell at -18 °C | °C | 12 | | | | |
| Restoring time | Minutes | 3 | | | | |
| | | | | | | |

| **SENSORYEVALUATION** | | | | | | |
|---|---|---|---|---|---|---|
| **Evaluating person** | **Cooking evaluation** | **Fragrance evaluation** | **Colour evaluation** | **Nose evaluation** | **Taste evaluation** | **Average** |
| User 1 | 10 | 10 | 10 | 10 | 10 | 10 |
| User 2 | 10 | 10 | 10 | 10 | 10 | 10 |
| User 3 | 10 | 10 | 10 | 10 | 10 | 10 |
| User 4 | 10 | 10 | 10 | 10 | 10 | 10 |
| User 5 | 10 | 10 | 10 | 10 | 10 | 10 |
| **Average** | 10 | 10 | 10 | 10 | 10 | 10 |
| | | | | | | |

| | **Min °C** | **Max °C** | **Judgment** | | | |
|---|---|---|---|---|---|---|
| **Temperature at product core** | -17.9 | -22 | OK | | | |
| | | | | | | |

| | **Sensory tests** | **Product core temperature** | **Final judgment** | | | |
|---|---|---|---|---|---|---|
| **Final judgment** | 10 | OK | OK | | | |

## Claims

1. Process for producing bread, frozen with quick recovery before its consumption, said process comprising the steps of:
- cooking the bread, after levitation, to 90% with respect to a time length of a complete cooking;
- immediately lowering the temperature of the cooked bread through the use of liquid nitrogen, down to a lowering temperature at most equal to -60 °C both in its crust, and in its core, the step of lowering the temperature to -60 °C from the output of the cooking step being performed for a time equal to about 9 minutes;
- packaging and freezing the bread, through a first sub-step of obtaining a temperature from -10 °C to -11 °C in the bread core, and a second sub-step of keeping the bread at a freezing temperature of -18 °C for at least 12 hours; and
- storing and transporting the packaged bread, always at a temperature of at least -18 °C.

2. Process according to claim 1, wherein the step of cooking occurs in a oven at a temperature from 160 °C to 260 °C for a cooking time from 20 to 50 minutes according to the type of bread.

## Patentansprüche

1. Verfahren für die Herstellung von tiefgekühltem Brot mit schnellem Aufbacken vor seinem Verzehr, das genannte Verfahren schließt folgende Phasen ein:
- Backen des Brotes nach dem Aufgehen zu 90% gegenüber der Dauer eines vollständigen Backvorganges;
- Sofortige Reduzierung der Temperatur des gebackenen Brotes durch die Verwendung von Flüssigstickstoff bis zu einer Temperaturreduzierung von max. - 60 °C sowohl in der Brotrinde als auch in der Brotkrume, die Temperaturreduzierungsphase auf - 60 °C nach dem Austritt aus der Backphase erfolgt für eine Zeit von etwa 9 Minuten;
- Verpackung und Tiefkühlung des Brotes durch eine erste Unterphase für den Erhalt einer Temperatur von - 10 °C bis - 11 °C in der Brotkrume und eine zweite Unterphase für die Aufbewahrung des Brotes bei einer Tiefkühltemperatur von - 18 °C für mindestens 12 Stunden; und
- Lagerung und Transport des verpackten Brotes, jeweils bei einer Temperatur von mindestens - 18 °C.

2. Verfahren gemäß Patentanspruch 1, in dem die Backphase in einem Ofen bei einer Temperatur von 160 °C bis 260 °C für eine Backzeit von 20 bis 50 Minuten je nach dem Typ des Brotes erfolgt.

## Revendications

1. Procédure pour la production de pain surgelé, avec cuisson rapide avant la consommation, composée des phases suivantes :
- cuisson du pain, après levage, à 90% par rapport à la durée d'une cuisson complète ;
- refroidissement rapide et immédiat du pain à l'aide d'azote liquide, jusqu'à une température de -60 °C sur la croute et à l'intérieur du pain ; la phase de refroidissement rapide à -60 °C, réalisée après la phase de cuisson, dure environ 9 minutes ;
- conditionnement et surgélation du pain à travers une première sous-phase d'obtention d'une température de -10 °C à -11 °C à l'intérieur d'un pain et une seconde sous-phase de maintien du pain à une température de surgélation de -18 °C pendant au moins 12 heures ; et
- stockage et transport du pain emballé toujours à une température d'au moins -18 °C.

2. Procédure selon la revendication 1 où la phase de cuisson a lieu au four à une température de 160 °C à 260 °C pendant un temps de cuisson de 20 à 50 minutes en fonction du type de pain.
